# EUROPEAN PATENT SPECIFICATION

(11) **EP 2 556 233 B1**
(45) Date of publication and mention of the grant of the patent: **25.06.2014**
(21) Application number: 11703838.0
(22) Date of filing: 11.01.2011
(51) Int. Cl.: F02D 41/40

(54) **METHOD OF CONTROLLING THE OPERATION OF A FUEL INJECTOR**
VERFAHREN ZUR STEUERUNG DES BETRIEBS EINES KRAFTSTOFFEINSPRITZERS
PROCÉDÉ DE COMMANDE DU FONCTIONNEMENT D'UN INJECTEUR DE CARBURANT

(30) Priority: 12.01.2010 GB 201000457
(43) Date of publication of application: 13.02.2013
(73) Proprietor: Jaguar Land Rover Limited, Whitley Coventry CV3 4LF (GB)
(72) Inventor: BROCKLEY, Nick, Coventry Warwickshire CV3 4LF (GB)
(74) Representative: Holmes, Matthew William
(86) International application number: PCT/EP2011/050276
(87) International publication number: WO 2011/086068

(56) References cited:
- DE-A1- 10 328 789
- DE-A1- 19 712 143
- DE-A1-102005 001 428
- DE-B3-102006 033 459

## Description

### Field of Invention

The present invention relates to a method of controlling the operation of a fuel injector. The invention further extends to an engine control unit operating in accordance with the method of injector control. In particular, the invention relates to the mitigation of pressure wave effects within the injector structure during operation of the injector.

### Background to the Invention

Fuel injection is a system for mixing fuel with air in an internal combustion engine. It has become the primary fuel delivery system used in automotive petrol engines, having almost completely replaced carburettors in the late 1980s.

A fuel injection system is designed and calibrated specifically for the type(s) of fuel it will handle. Most fuel injection systems are for gasoline or diesel applications. With the advent of electronic fuel injection (EFI), the diesel and gasoline hardware has become similar. EFI's programmable firmware has permitted common hardware to be used with different fuels.

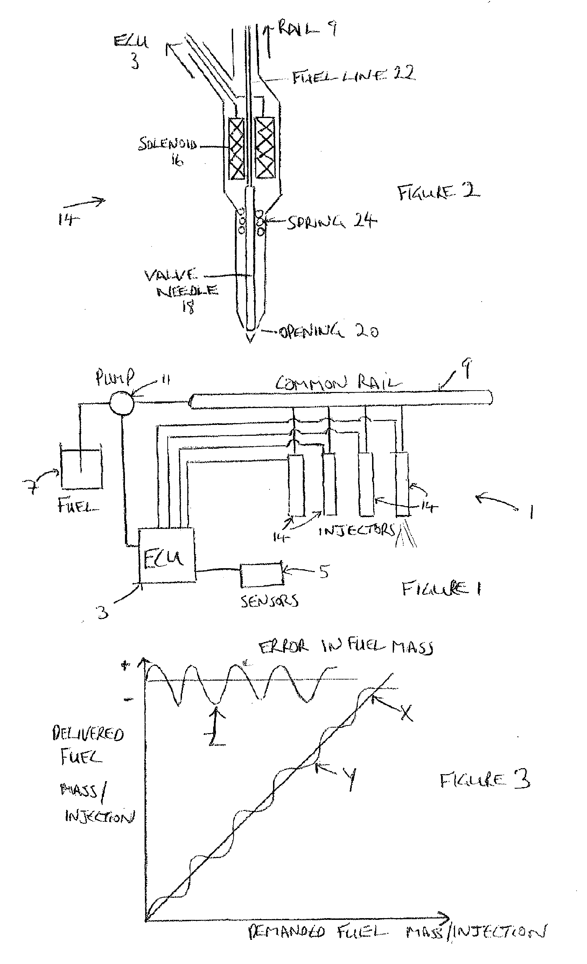

An engine system comprising a fuel injector and control hardware will now be briefly described with reference to Figures 1 and 2.

As shown in Figure 1, a fuel injection system 1 (or electronic fuel injection (EFI) system) comprises a computer called the Engine Control Unit (ECU) 3, which monitors engine operating parameters via various sensors 5. The ECU interprets these parameters in order to calculate the appropriate amount of fuel to be injected, among other tasks, and controls engine operation by manipulating fuel and/or air flow as well as other variables. The optimum amount of injected fuel depends on conditions such as engine and ambient temperatures, engine speed and workload, and exhaust gas composition.

In the example of Figure 1 the engine system comprises a source of fuel 7 which is in fluid communication with an accumulator volume 9 (or common rail) via a pump 11. The pump 11 is controlled by the ECU 3. The common rail supplies fuel to a plurality of injectors 14. The ECU is further in communication with the injectors and a number of engine sensors 5 (for clarity only one such sensor is shown in Figure 1). During operation of the engine the ECU sends control pulses to the injectors in order to control the opening and closing of the injector valves (see Figure 2).

Figure 2 is a simplified representation of a fuel injector 14. The ECU 3 controls the operation of a solenoid 16 which in turn controls the movement of a valve needle 18. When fuel is intended to be injected into the engine the ECU actives the solenoid 16, causing the valve needle 18 to be pulled upwards by magnetic force. The upward movement of the valve needle uncovers a valve opening 20 which allows high pressure fuel to flow through the high pressure fuel line 22 to the valve opening. The fuel line is in fluid communication with the common rail 9. Once the required amount of fuel has been injected the ECU deactivates the solenoid 16 and a valve spring 24 returns the valve needle to its original position in which the valve opening is blocked.

The electronic fuel injector is normally closed, and opens to inject pressurized fuel as long as electricity is applied to the injector's solenoid coil. The duration of this operation, called the pulse width, is proportional to the amount of fuel desired. The electric pulse may be applied by the ECU in closely-controlled sequence with the valve events on each individual cylinder (in a sequential fuel injection system), or in groups of less than the total number of injectors (in a batch fire system).

Pulse width is inversely related to pressure difference across the injector inlet and outlet. For example, if the fuel line pressure increases (injector inlet), or the manifold pressure decreases (injector outlet), a smaller pulse width will admit the same fuel. Fuel injectors are available in various sizes and spray characteristics as well. Compensation for these and many other factors are programmed into the ECU's software.

The above arrangement of fuel injectors and common rail is a direct injection system. Other fuel injector systems, e.g. unit pump and unit injector arrangements, are also known.

During operation of the fuel injector pressure waves caused by the opening and closing of the valve needle can be created within the injector lines. Such pressures waves may resonate within the injector and the fuel injection system and may affect the volume of fuel delivered by an injector into the engine.

Figure 3 is a representation of demanded fuel amount (i.e. the amount of fuel calculated as required by the engine in response to a driver selected throttle position) versus actual delivered fuel amount for a given fuel pressure.

In an ideal engine system operating a linear relationship between demanded and supplied fuel would be expected (see line X). The inventors of the present invention have, however, observed that the relationship between these two quantities varies (see line Y). The impact within the fuel injector of this non-linear relationship is that the quantity of fuel that is supplied varies in comparison to the expected amount of fuel supplied (as calculated by the ECU).

This variation in fuel amount is shown by line Z and it can be seen that depending on the engine operating condition (as determined by the demanded fuel amount) the delivered amount of fuel may be more or less than desired.

It is noted that the variation in fuel amounts from the injector can have negative effects on the emission levels of the engine. Furthermore, variation in fuel amounts can lead to reduced system performance and poor combustion.

One known method of mitigating the effects of pressure variations on fuel supply is to alter the speed at which the valve needle of the injector is opened and closed. If the opening and closing events are fast then this tends to increase the severity of the pressure waves within the injector. Therefore, by reducing the speed at which the valve needle lifts away from its seating and the speed at which it closes the effects of the pressure waves may be reduced. It is noted however that this solution requires a sophisticated control system hardware with associated high hardware costs.

A further method of mitigating the effects of pressure variations on fuel supply is to drop the fuel pressure within the common rail and the injectors. However, although this can reduce the effects of pressure resonances within the fuel system it tends to increase the particulates emitted by the engine.

A yet further method of mitigating the effects of pressure variations on fuel supply is to fix the pressure and temperature within the fuel system and to measure the pressure variations that occur across the entire engine operating cycle so that they can be predicted during subsequent engine operation. Although this method may address the effects of the pressure resonances it is expensive and the hardware required to accurately fix the pressure/temperature is complex.

It is therefore an object of the present invention to address the above mentioned problems.

For further information relating to methods of correcting for fuel delivery errors in fuel injection systems, the reader is directed to German patent publication numbers DE-B3-10-2006-0033459 (Siemens AG), DE-A1-10-2005-001428 (Bosch GmbH Robert), DE-A1-19712143 (Bosch GmbH Robert) and DE-A1-10328789 (Bosch GmbH Robert).

### Statements of Invention

According to a first aspect of the present invention there is provided a method of controlling the operation of a fuel injector within an engine system to compensate for fuel delivery errors arising from pressure variations within the engine system, the injector being associated with an injector operating value, the method comprising: receiving data related to at least one engine operating parameter; determining a compensation value for the injector operating value in dependence on the at least one engine operating parameter wherein determining a compensation value comprises calculating the compensation value from an engine model that compensates for fuel errors arising from pressure waves within the engine system using the at least one engine operating parameter and determining the compensation value further comprises compensating for phase errors between modelled pressure waves and actual pressure waves within the injector; applying the compensation value to the injector operating value in order to control the operation of the fuel injector.

The present invention provides a mechanism for compensating for fuel delivery errors in which an engine operating parameter (e.g. fuel temperature or fuel pressure) is received and used to determine a compensation value for an injector operating value (e.g. a compensation for the injector open time). Once determined the compensation value can be applied to the injector operating value to control the operation of the injector. In this manner the method of the present invention mitigates against fuel delivery errors caused by pressure variations within the injector by compensating the injector opening time in anti phase with the pressure resonances to cancel or at least reduce the original error in the delivered fuel mass.

Preferably, receiving data related to at least one operating parameter comprises receiving data related to the fuel pressure and fuel temperature and the engine model compensates for fuel errors in dependence on the received data.

It is noted that the pressure waves within the fuel injector actually comprise a number of components. In one embodiment the pressure waves may be represented by two components, a high frequency component and a low frequency component. In this embodiment the engine model may conveniently comprise a first model that compensates for fuel errors arising from high frequency pressure waves within the engine system and a second model that compensates for fuel errors arising from low frequency pressure waves within the engine system. In another embodiment the pressure waves may comprise more than two components and the second model may compensate for errors arising from the low and/or multi frequency pressure waves.

Conveniently, where there are first and second models, determining the compensation value comprises combining the output from the first and second models to generate a combined compensation value.

Conveniently, the engine model comprises a look up table (or map) relating the at least one operating parameter to a compensation value.

The at least one engine operating parameter used to calculate the compensation value may comprise one or more of the following parameters: injector opening time, fuel temperature and pressure.

In an alternative embodiment, instead of a look up table, database or map the engine model may comprise a theoretical model to model the effects of pressure variations. For example, the theoretical model may model pressure variations within the engine system on the basis of a sine waveform.

The method may further comprise receiving the injector operating value. For example, the injector operating value may comprise the injector opening time required to supply a demanded fuel amount.

In the event that the injector operating value is an injector opening time, the compensation value may comprise an adjustment to the injector opening time. The applying step may then comprise generating a compensated injector operating value.

Preferably, the compensation value comprises a multiplier or scaling factor for the injector opening time.

According to a second aspect of the present invention there is provided an electronic control unit arranged to control the operation of a fuel injector within an engine system to compensate for fuel delivery errors arising from pressure variations within the engine system, the injector being associated with an injector operating value, the electronic control unit comprising: receiving means arranged to receive data related to at least one engine operating parameter; determining means arranged to determine a compensation value for the injector operating value in dependence on the at least one engine operating parameter, wherein determining a compensation value comprises calculating the compensation value from an engine model that compensates for fuel errors arising from pressure waves within the engine system using the at least one engine operating parameter and determining the compensation value further comprises compensating for phase errors between modelled pressure waves and actual pressure waves within the injector; applying means arranged to apply the compensation value to the injector operating value in order to control the operation of the fuel injector.

The invention also extends to a computer readable medium comprising a computer program arranged to configure a computer or an electronic control unit to implement the method according to the first aspect of the invention.

### Brief description of the drawings

In order that the invention may be more readily understood, reference will now be made by way of example to the accompanying drawings in which:
Figure 1 shows a representation of a known electronically-controlled fuel injector engine system;
Figure 2 shows a representation of the structure of an injector;
Figure 3 shows a graph of a relationship between demanded fuel amount and actual supplied fuel amount;
Figure 4 is a flow chart of a method of controlling a fuel injector in accordance with an embodiment of the present invention;
Figure 5 is a schematic of a control system in accordance with an embodiment of the present invention;
Figure 6 is a graph showing the dominant components of the pressure resonance within the injector;
Figure 7 is a more detailed schematic of the control system of Figure 5;
Figure 8 shows a 2D representation of a phase adjustment calculation;
Figures 9-11 show the effects of adjusting the phase of the injector opening time;
Figure 12 shows a resonance map with a resonance model in accordance with an embodiment of the present invention;
Figure 13 shows the effects of the phase adjustment calculation of Figure 8 on fuel compensation values;
Figure 14 is a 3D diagram showing how injector opening time input to the compensation model is varied with temperature and pressure in order to keep modelled compensation in phase with the real system (variations in the figure have been exaggerated for clarity);
Figures 15-17 show how the injector opening time varies from the standard value derived by the ECU, through the phase adjustment and then the resonance model compensation (at a fixed pressure 14Mpa);
Figures 18-19 show the results of an evaluation of the compensation system in accordance with an embodiment of the present invention.

### Detailed description of the invention

In the following description and associated drawings like numerals are used to denote like features.

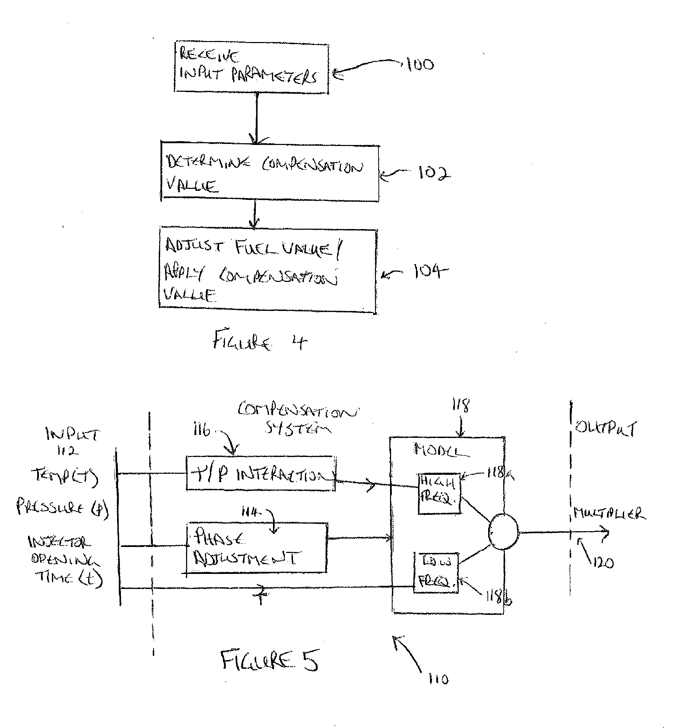

Figure 4 is a flow chart of a method of controlling a fuel injector in accordance with an embodiment of the present invention.

In Step 100 engine operating parameters, for example, fuel pressure and temperature are received and sent to an engine model.

In Step 102 a compensation value for an injector operating value is determined from the engine model in dependence upon the received engine operating parameters.

In Step 104 the calculated compensation value is applied to the injector operating value in order to produce a compensated injector operating value.

Figure 5 shows a simplified schematic of a control system 110 in accordance with an embodiment of the present invention.

Inputs 112 relating to fuel temperature, fuel pressure and the standard injector opening time as would normally be calculated by the ECU 3 in response to a driver requested fuel demand, i.e. throttle pedal position engine speed etc, are input into the "compensation" system 110.

In order to keep modelled resonances in phase with (/aligned with) real system resonances the standard injector time is modified with reference to the pressure and temperature within the engine system.

In parallel with the phase adjustment 114 an effective temperature value is also calculated (box 116). Raising the temperature of the fuel affects the density and elasticity, or compressibility, of the fluid. (ref. bulk modulus of the fluids). Similarly, changing the pressure of the system also affects the density and elasticity, or compressibility, of the fluid. The function in Box 116 combines these separate effects into an equivalent effect of just changing the temperature. This allows the effect of changing the system pressure to be considered as a equivalent change in temperature.

The phase adjusted injector opening time and the effective temperature value are then fed into the resonance model 118 which then calculates a compensation value (i.e. a scaling factor or multiplier) to be applied to the injector opening time to compensate for the effects of the pressure resonances within the fuel injector.

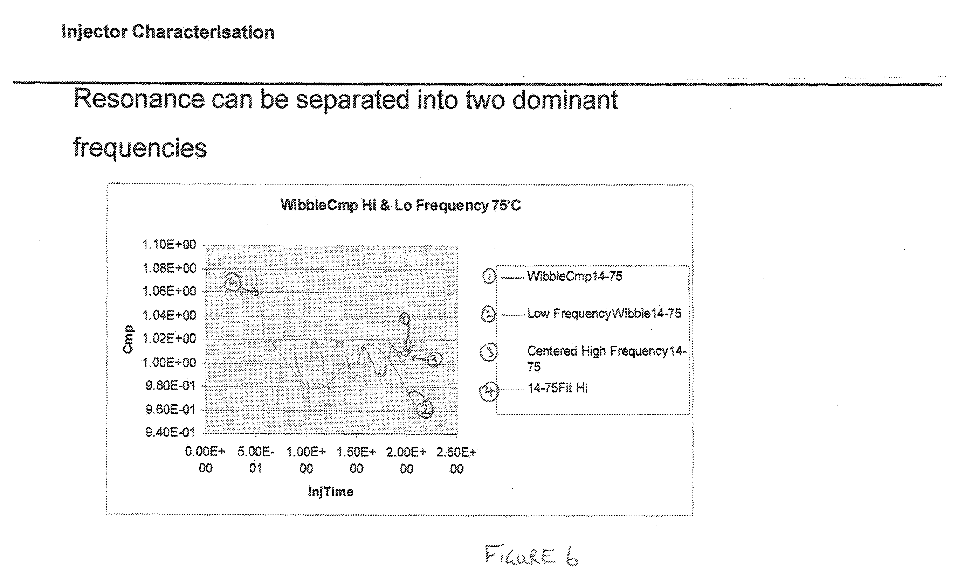

The model actually comprises a first model 118a that relates to the effects of high frequency pressure waves within the fuel injector and a second model 118b that relates to the effects of low frequency pressure waves within the fuel injector. The presence of two models is in response to the fact that the invention recognises that the pressure resonance within the injector comprises two or more dominant components, a high frequency component and a low and/or multi frequency component (see also Figure 6 which shows the separation of the resonance effects into these two dominant components for a fuel pressure of 14MPa and a temperature of 75ºC).

The output 120 of the resonance model 118 (which is in fact a combination of the output of the first and second sub-models) is a scaling or multiplier function that can be applied to the injector opening time to generate a compensated injector opening time.

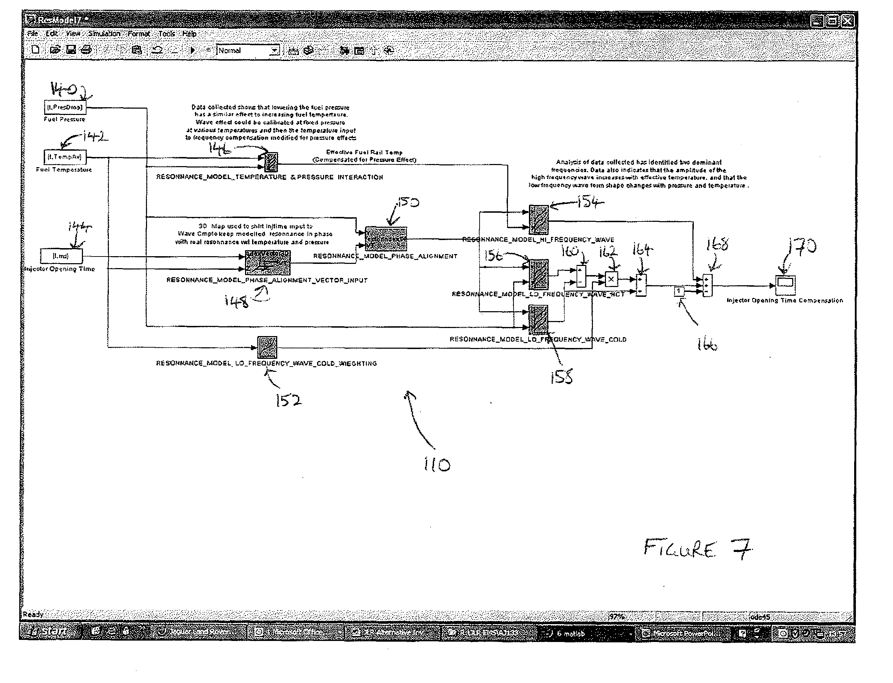

Figure 7 is a more detailed schematic of the control system of Figure 5. Input parameters relating to rail pressure (box 140), rail temperature (box 142) and the standard injector opening time (box 144), as described above in relation to Figure 5, are input into the "compensation" system 110. It is expected that the compensation system in accordance with embodiments of the present invention would be integrated within an ECU. However, alternatively a separate controller may be used.

In Box 146 the effective rail temperature is calculated taking into account the measured pressure within the system as described in relation to Figure 5 above (see box 116 in Figure 5).

The modelled pressure resonances (pressure wave variations) can vary in phase with the real "in system" resonances. In order to ensure that the models are in alignment with the real world system a phase adjustment is calculated in boxes 148 and 150.

Boxes 148 & 150 modify the injector opening time (supplied from Box 144), against fuel temperature (input received from Box 142) and fuel pressure (input received from Box 140) to provide a modified injector opening time to be used in the resonance models (see boxes 154, 156 & 158).

It is noted that the phase adjustment calculation that is performed (in boxes 148 & 150) is effectively used to stretch or compress the resonance waves that are characterised in the resonance model (boxes 154, 156 & 158). In other words the wavelength (frequency) of these modelled resonance waves is varied with the engine parameters (fuel temp/fuel pressure) in order to keep the modelled resonances in phase or aligned with the real system resonances.

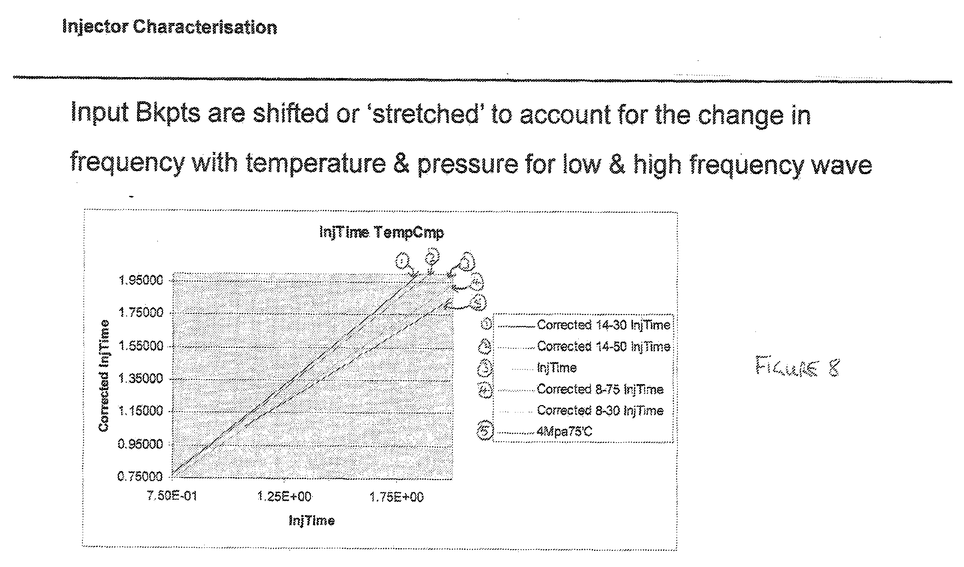

Figure 8 shows a 2D representation of the function of the phase adjustment calculation where it can be seen that the injector opening time is corrected for a range of different fuel temperature/pressures. The standard injector opening time is shown as the central trace. Corrected injector times for two different pressures (8MPa and 14MPa) and three different temperatures (30ºC, 50ºC and 75ºC) are shown.

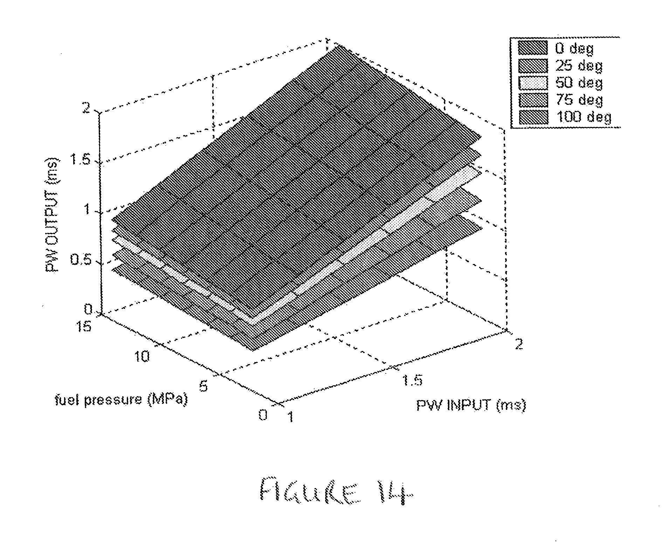

It is noted that Figure 8 is a 2D extract of the 3D phase alignment diagram shown in Figure 14 which shows how the injector opening time (pulse width - input) is modified with respect to temperature and pressure to give an output pulse width that is used within the resonance models. It is noted that the 2D plot of Figure 8 represents real data.

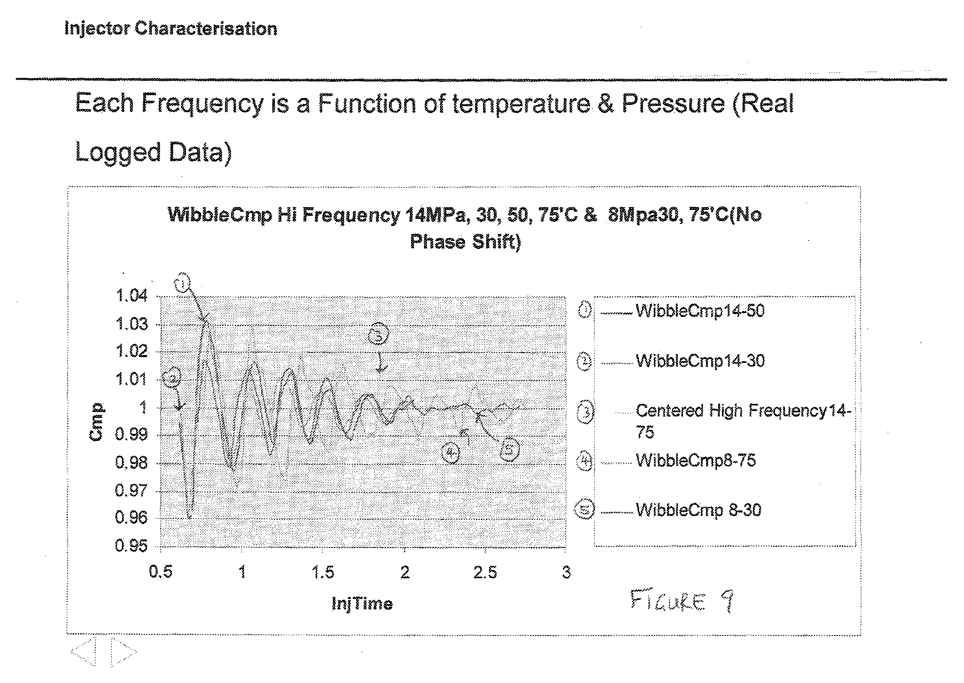

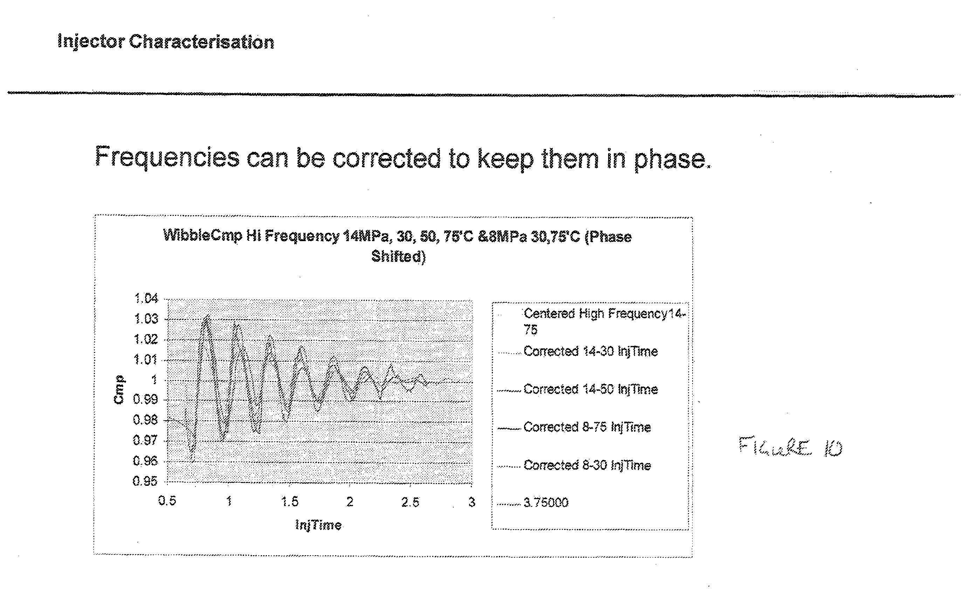

Figure 9 shows how the high frequency resonance is a function of temperature and pressure for the two pressures and three different temperatures mentioned in relation to Figure 8. Figure 9 shows the high frequency resonance before any phase adjustment has taken place. Figure 10 is equivalent to Figure 9 but shows the high frequency resonance after a phase adjustment has been made (via the phase adjustment calculation performed in Boxes 148 & 150). It can now be seen that all the various traces are in phase.

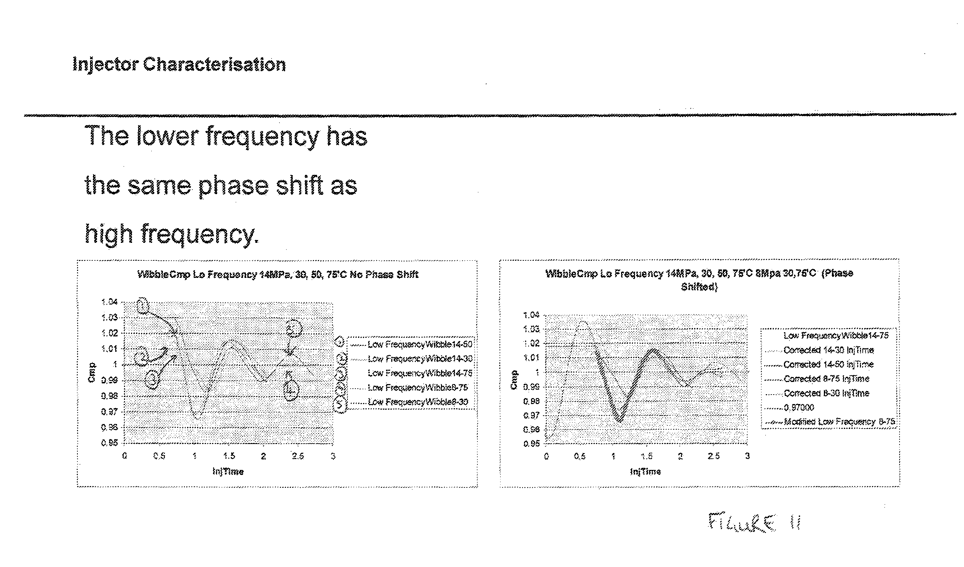

Figure 11 shows two graphs similar to Figures 9 and 10 but for the low frequency resonance component. It can again be seen that the various traces can be phase shifted so that they are in alignment.

As noted above the invention recognises that the pressure resonance within the injector comprises two or more dominant components, a high frequency component and a low or multi frequency component. Each of these components affects the amount of fuel supplied to the injector. The high/low frequency models therefore represent the compensation required within the system to mitigate the effects of the pressure resonances.

Box 154 relates to the high frequency pressure component and the associated resonance model that is used to correct the injector opening time for the high frequency pressure wave within the fuel system.

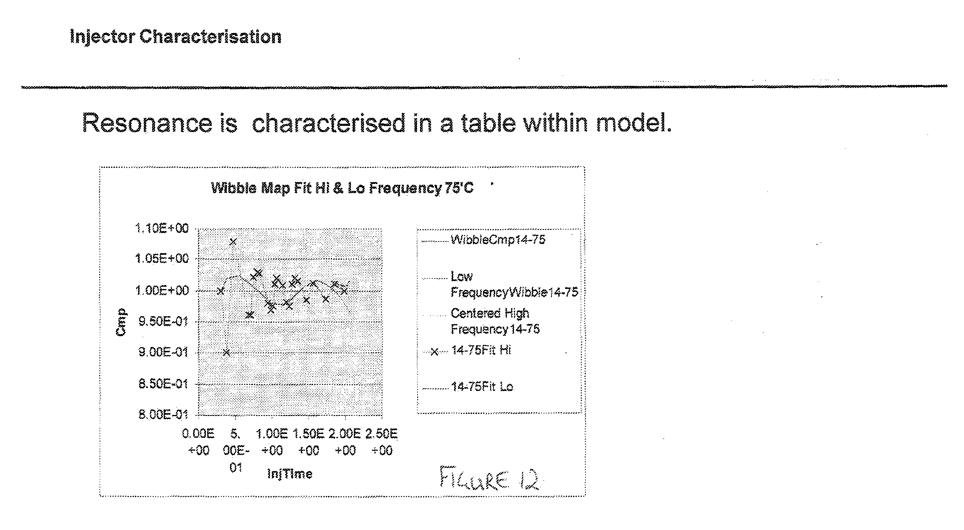

It is noted that the high frequency resonance model comprises a series of compensation curves (see Figure 12) that provide a scaling factor or multiplier to applied to the standard injector opening time that is calculated within the ECU. The effective rail temperature in box 146 is used to select the appropriate curve from a database or two dimensional look up table/map stored in or in communication with the ECU.

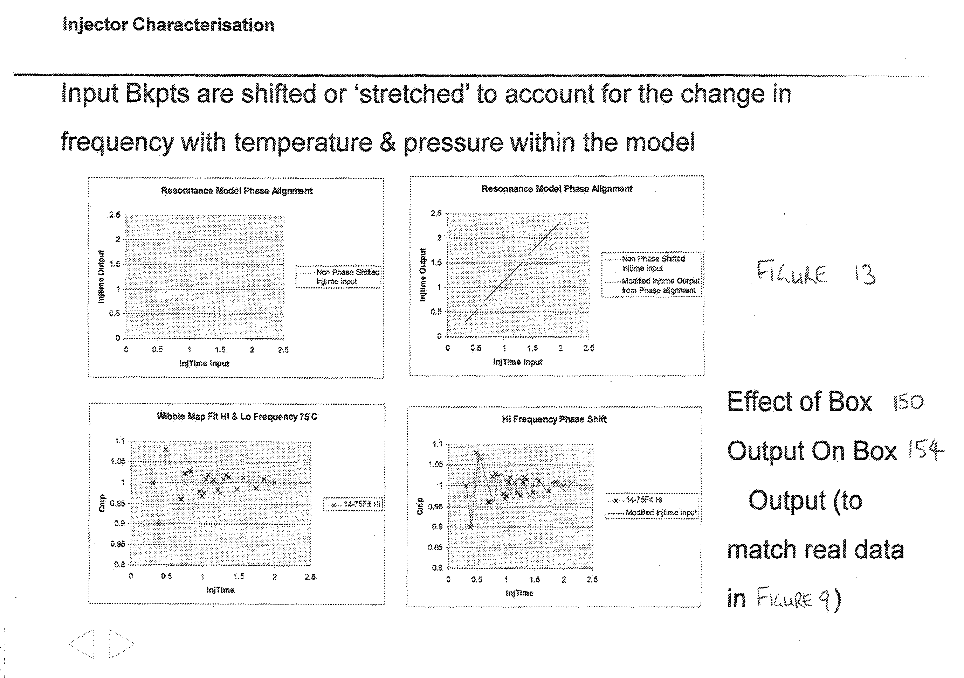

It is further noted that the injector opening time that is input to the resonance model is actually the phase adjusted injector time as previously calculated in boxes 148 and 150 to keep the wavelength in phase with the real system. Figure 13 shows the effect that the phase adjustment can have on the calculated compensation value. The two graphs on the left hand side of the Figure show the determination of a compensation value in the case where no phase adjust has been made. The two graphs on the right hand side of the Figure show how the compensation value is altered once a phase adjustment has been made.

Boxes 156 and 158 relate to the low frequency pressure component and the associated resonance models that are used to correct the injector opening time for the low frequency pressure wave within the fuel system. As before the resonance model comprises a series of compensation curves (that provide a scaling factor or multiplier) to the existing basic linear characterisation of delivered fuel mass v injector opening time within the ECU for a given pressure drop across the injector. The size or amplitude of the compensation varies with pressure. Figure 12 illustrates the low (and also high) frequency compensation value for a fuel pressure of 14MPa and a temperature of 75ºC.

Two low or multi frequency resonance models are present within the compensation system of Figure 7 and these relate to different temperatures of the fuel within the system. The output from either 156 or 158 may therefore be used depending on the temperature of the fuel. Alternatively, any fractional weighted combination of the two low frequency resonance models may be used.

The output of the high and low frequency resonance models are combined (via boxes 160-164) to provide an overall compensation value which is then used to modify the injector opening time.

Boxes 160, 162, & 164 are a way of weighting between the outputs of the various resonance models. Under Hot conditions only the output from the low frequency resonance model represented by box 156 will be used for the low frequency resonance component. For cold temperatures only box 158 will be used for the low frequency component. For warm-up & mid temperature ranges a fraction of each will be used calculated by boxes 160, 162, 164. The level of weighting between the two low frequency resonance models is determined by the function in box 152 which, in turn, is determined from the fuel temperature input via box 142.

The low and high frequency components are summed together (box 168). Box 166 subtracts 1 from the total output from box 168 so that the total output is 1 when the model is not compensating.

Box 170 represents the compensation output from the model which is then used to factor the standard linear based injector opening time determined by the ECU according to known methods.

The Fuel Demand to Injector opening Time conversion (Linear) is assumed to already exist within the ECU, and is used as input in Box 144. The output at Box 170 from the model will be multiplied by the input to Box 144 to give a compensated injector opening time to be used by the injectors.

Having boxes 156 & 158 for the low and/or multi frequency components allows the shape and amplitude of the compensation to be changed with temperature independently of pressure, Pressure appears to be the dominant factor on waveform shape, and temperature appears to be a dominant factor on amplitude. This is a different relationship than for the high frequency which appears simpler.

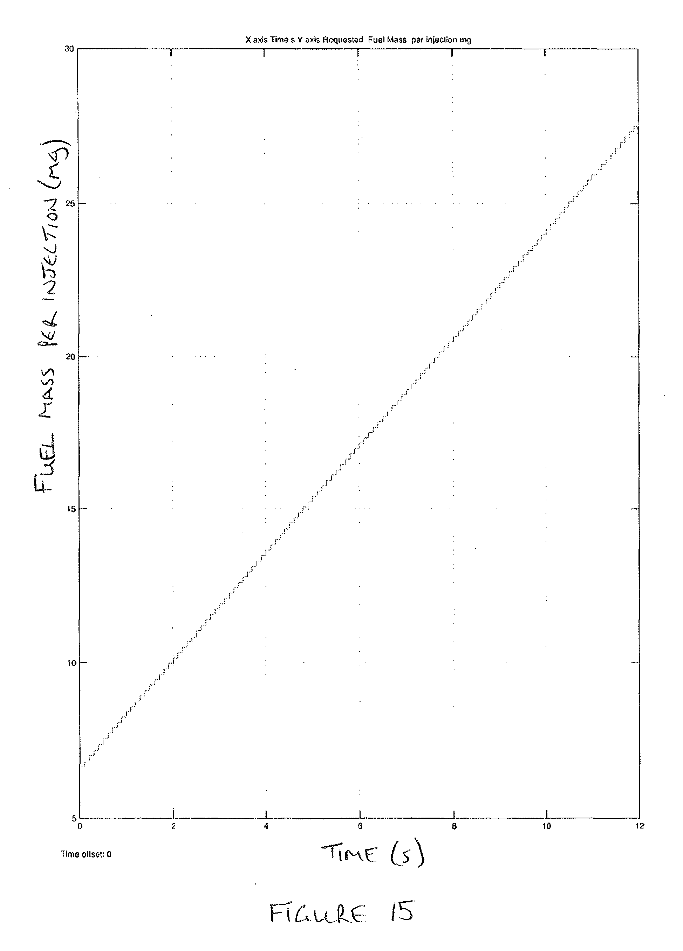

Figures 15 to 17 show an idealised injector pulse width to demonstrate how the injector opening time varies from the standard value derived by the ECU, through the phase adjustment and then the resonance model compensation (at a fixed pressure 14Mpa).

Figure 15 shows a driving situation where, over a ramp-up period of 12 seconds, the demanded fuel mass rises from approx 6.7mg to 27.7mg. In a fuel engine system in which there were no pressure waves (and associated fuelling errors) the injector opening time would be calculated to have a linear relationship over the same period of time. However, as described above pressure variations within the injector will cause fuelling errors and therefore in order to meet the demanded fuel mass plot shown in Figure 15 the compensation method of the present invention needs to be employed.

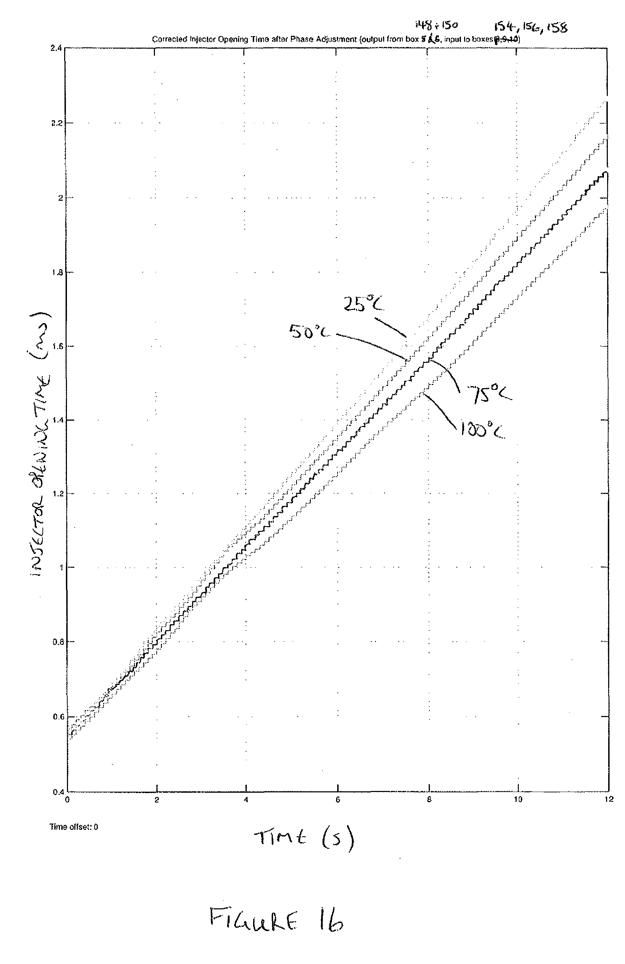

Figure 16 shows how the injector opening time is first phase adjusted (i.e. Figure 16 represents the output of boxes 148 and 150 into resonance models 154, 156 and 158 in Figure 7). The phase adjustment for different fuel temperatures is indicated within the figure.

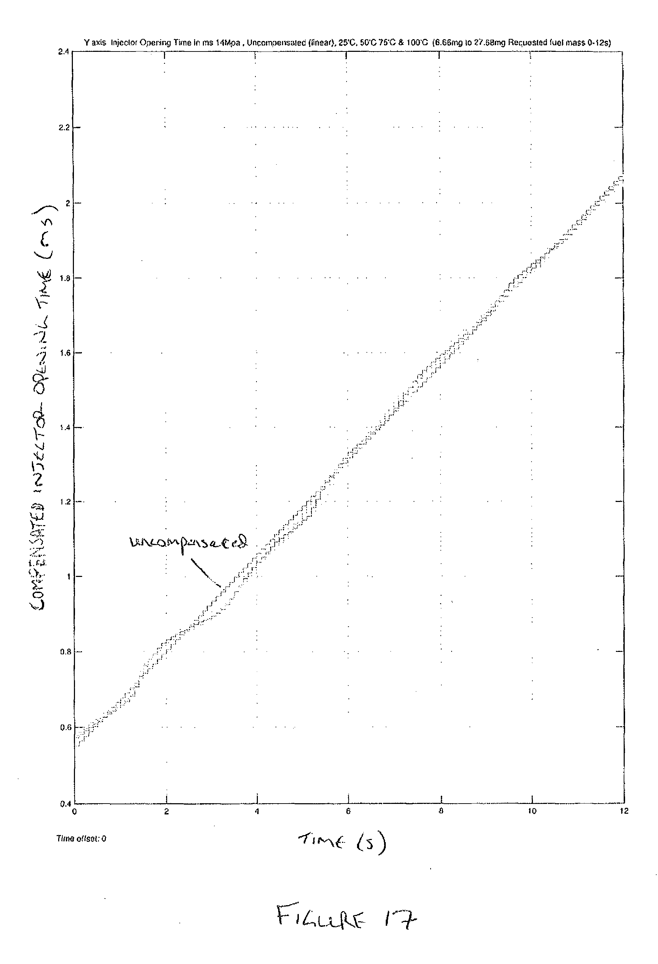

Figure 17 illustrates how the final compensated injector opening time varies over the 12 second period of Figure 15. It can be seen that all the compensated traces oscillate about the uncompensated injector opening time (i.e. the standard injector opening time that would normally be calculated by the ECU).

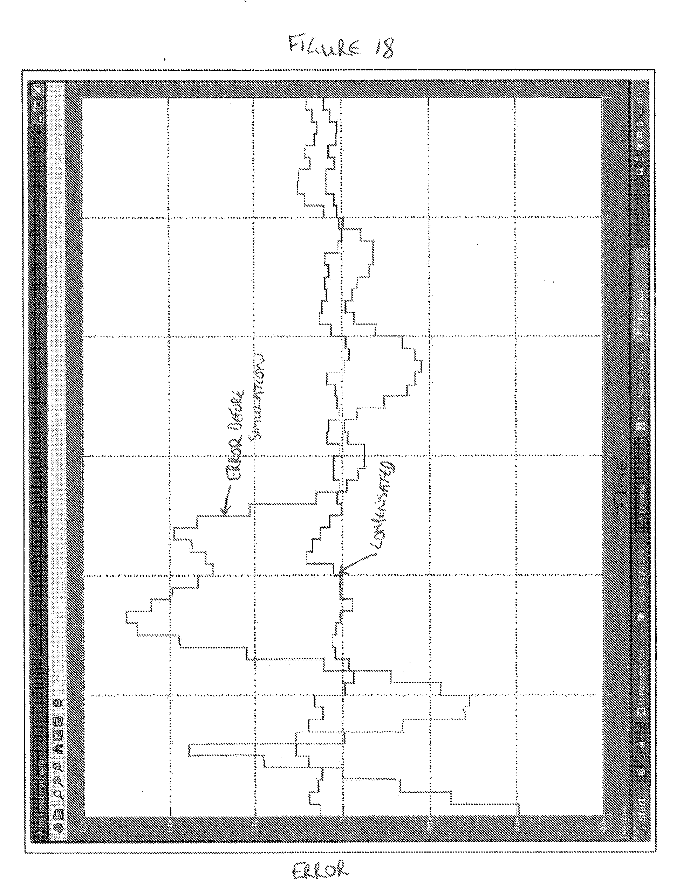

Figure 18 shows the pressure resonance related errors within the engine system prior to activation of the compensation system according to the present invention. A trace for the compensated system is also shown in which the error has been substantially suppressed.

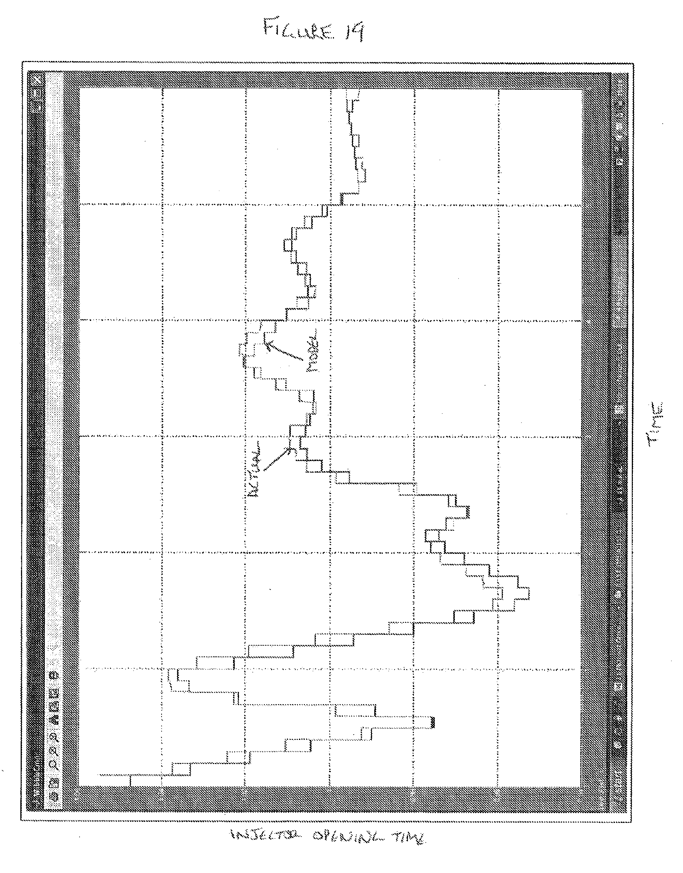

Figure 19 shows the actual required injector opening time compensation to eliminate pressure resonance related errors and the injector opening time compensation returned by the compensation system according to present invention. As can be seen from the figure there is a close correlation between the actual and modelled compensations.

It will be understood that the embodiments described above are given by way of example only and are not intended to limit the invention, the scope of which is defined in the appended claims. It will also be understood that the embodiments described may be used individually or in combination.

## Claims

1. A method of controlling the operation of a fuel injector (14) within an engine system (1) to compensate for fuel delivery errors arising from pressure variations within the engine system (1), the injector (14) being associated with an injector operating value, the method comprising:
receiving data related to at least one engine operating parameter (100);
determining a compensation value for the injector operating value in dependence on the at least one engine operating parameter (102), wherein determining the compensation value comprises calculating the compensation value from an engine model that compensates for fuel errors arising from pressure waves within the engine system using the at least one engine operating parameter, and further comprises compensating for phase errors between modelled pressure waves and actual pressure waves within the injector;
applying the compensation value to the injector operating value in order to control the operation of the fuel injector (104).

2. A method as claimed in Claim 1, wherein receiving data related to at least one operating parameter comprises receiving data related to the fuel pressure and fuel temperature and the engine model compensates for fuel errors in dependence on the received data.

3. A method as claimed in either Claim 1 or Claim 2, wherein the engine model (118) comprises a first model (118a) that compensates for fuel errors arising from high frequency pressure waves within the engine system and a second model (118b) that compensates for fuel errors arising from low frequency pressure waves within the engine system (1).

4. A method as claimed in Claim 3, wherein determining the compensation value comprises combining the output from the first and second models (118a, 118b) to generate a combined compensation value.

5. A method as claimed in any one of the preceding claims, wherein the engine model (118) comprises a look up table relating the at least one operating parameter to a compensation value.

6. A method as claimed in Claim 5, wherein the at least one engine operating parameter comprises one of: injector opening time, fuel temperature and pressure.

7. A method as claimed in any one of claims 1 to 4, wherein the engine model (118) comprises a theoretical model.

8. A method as claimed in Claim 7 wherein the theoretical model comprises modelling pressure variations within the engine system (1) on the basis of a sine waveform.

9. A method as claimed in any preceding claim, further comprising receiving the injector operating value.

10. A method as claimed in Claim 9, wherein the injector operating value comprises the injector opening time required to supply a demanded fuel amount.

11. A method as claimed in any preceding claim, wherein the injector operating value is an injector opening time and the compensation value comprises an adjustment to the injector opening time.

12. A method as claimed in Claim 11, wherein the applying step comprises generating a compensated injector operating value.

13. A method as claimed in Claim 11 or Claim 12, wherein the compensation value comprises a multiplier or scaling factor for the injector opening time.

14. An electronic control unit (3) arranged to control the operation of a fuel injector (14) within an engine system (1) to compensate for fuel delivery errors arising from pressure variations within the engine system (1), the injector (14) being associated with an injector operating value, the electronic control unit (3) comprising:
receiving means arranged to receive data related to at least one engine operating parameter;
determining means arranged to determine a compensation value for the injector operating value in dependence on the at least one engine operating parameter wherein determining the compensation value comprises calculating the compensation value from an engine model that compensates for fuel errors arising from pressure waves within the engine system using the at least one engine operating parameter, and further comprises compensating for phase errors between modelled pressure waves and actual pressure waves within the injector;
applying means arranged to apply the compensation value to the injector operating value in order to control the operation of the fuel injector.

15. A computer readable medium comprising a computer program arranged to configure a computer or an electronic control unit to implement the method according to any one of Claims 1 to 13.

## Patentansprüche

1. Verfahren zur Steuerung des Betriebs einer Kraftstoffeinspritzdüse (14) in einem Motorsystem (1), um Kraftstoffzufuhrabweichungen zu kompensieren, die sich aus Druckschwankungen innerhalb des Motorsystems (1) ergeben, wobei die Einspritzdüse (14) mit einem Einspritzdüsen-Betriebsventil verbunden ist, wobei das Verfahren Folgendes umfasst:
Empfangen von Daten, die sich auf mindestens einen Motorbetriebsparameter (100) beziehen,
Bestimmen eines Kompensationswertes für den Einspritzdüsen-Betriebswert in Abhängigkeit von dem mindestens einen Motorbetriebsparameter (102), wobei das Bestimmen des Kompensationswertes das Berechnen des Kompensationswertes aus einem Motormodell, das Kraftstoffabweichungen kompensiert, die sich aus Druckwellen innerhalb des Motorsystems ergeben, unter Verwendung des mindestens einen Motorbetriebsparameters umfasst und ferner das Kompensieren von Phasenabweichungen zwischen modellierten Druckwellen und tatsächlichen Druckwellen innerhalb der Einspritzdüse umfasst,
Anwenden des Kompensationswertes auf den Einspritzdüsen-Betriebswert, um den Betrieb der Kraftstoffeinspritzdüse (104) zu steuern.

2. Verfahren nach Anspruch 1, wobei das Empfangen von Daten, die sich auf mindestens einen Motorbetriebsparameter beziehen, das Empfangen von Daten, die sich auf den Kraftstoffdruck und die Kraftstofftemperatur beziehen, umfasst und das Motormodell Kraftstoffabweichungen in Abhängigkeit von den empfangenen Daten kompensiert.

3. Verfahren nach entweder Anspruch 1 oder Anspruch 2, wobei das Motormodell (118) ein erstes Modell (118a) umfasst, das Kraftstoffabweichungen kompensiert, die sich aus hochfrequenten Druckwellen innerhalb des Motorsystems ergeben, sowie ein zweites Modell (118b), das Kraftstoffabweichungen kompensiert, die sich aus niederfrequenten Druckwellen innerhalb des Motorsystems (1) ergeben.

4. Verfahren nach Anspruch 3, wobei das Bestimmen des Kompensationswertes das Kombinieren der Ausgabe aus dem ersten und dem zweiten Modell (118a, 118b) umfasst, um einen kombinierten Kompensationswert zu erzeugen.

5. Verfahren nach einem der vorhergehenden Ansprüche, wobei das Motormodell (118) eine Nachschlagetabelle umfasst, die den mindestens einen Betriebsparameter in Beziehung zu einem Kompensationswert setzt.

6. Verfahren nach Anspruch 5, wobei der mindestens eine Motorbetriebsparameter einen der Folgenden umfasst: Einspritzdüsen-Öffnungszeit, Kraftstofftemperatur und -druck.

7. Verfahren nach einem der Ansprüche 1 bis 4, wobei das Motormodell (118) ein theoretisches Modell umfasst.

8. Verfahren nach Anspruch 7, wobei das theoretische Modell das Modellieren von Druckschwankungen innerhalb des Motorsystems (1) auf Basis einer Sinuskurvenform umfasst.

9. Verfahren nach einem der vorhergehenden Ansprüche, ferner das Empfangen des Einspritzdüsen-Betriebswertes umfassend.

10. Verfahren nach Anspruch 9, wobei der Einspritzdüsen-Betriebswert die Einspritzdüsen-Öffnungszeit umfasst, die erforderlich ist, um eine angeforderte Kraftstoffmenge zuzuführen.

11. Verfahren nach einem der vorhergehenden Ansprüche, wobei der Einspritzdüsen-Betriebswert eine Einspritzdüsen-Öffnungszeit ist und der Kompensationswert eine Anpassung der Einspritzdüsen-Öffnungszeit umfasst.

12. Verfahren nach Anspruch 11, wobei der Anwendungsschritt das Erzeugen einer kompensierten Einspritzdüsen-Öffnungszeit umfasst.

13. Verfahren nach Anspruch 11 oder Anspruch 12, wobei der Kompensationswert einen Multiplikator oder Skalierfaktor für die Einspritzdüsen-Öffnungszeit umfasst.

14. Elektronische Steuereinheit (3), die dafür eingerichtet ist, den Betrieb einer Kraftstoffeinspritzdüse (14) in einem Motorsystem (1) zu steuern, um Kraftstoffzufuhrabweichungen zu kompensieren, die sich aus Druckschwankungen innerhalb des Motorsystems (1) ergeben, wobei die Einspritzdüse (14) mit einem Einspritzdüsen-Betriebsventil verbunden ist, wobei die elektronische Steuereinheit (3) Folgendes umfasst:
Empfangsmittel, die dafür eingerichtet sind, Daten zu empfangen, die sich auf mindestens einen Motorbetriebsparameter beziehen,
Bestimmungsmittel, die dafür eingerichtet sind, einen Kompensationswert für den Einspritzdüsen-Betriebswert in Abhängigkeit von dem mindestens einen Motorbetriebsparameter zu bestimmen, wobei das Bestimmen des Kompensationswertes das Berechnen des Kompensationswertes aus einem Motormodell, das Kraftstoffabweichungen kompensiert, die sich aus Druckwellen innerhalb des Motorsystems ergeben, unter Verwendung des mindestens einen Motorbetriebsparameters umfasst und ferner das Kompensieren von Phasenabweichungen zwischen modellierten Druckwellen und tatsächlichen Druckwellen innerhalb der Einspritzdüse umfasst,
Anwendungsmittel, die dafür eingerichtet sind, den Kompensationswert auf den Einspritzdüsen-Betriebswert anzuwenden, um den Betrieb der Kraftstoffeinspritzdüse zu steuern.

15. Computerlesbares Medium, das ein Computerprogramm umfasst, welches dafür eingerichtet ist, einen Computer oder eine elektronische Steuereinheit dafür zu konfigurieren, das Verfahren nach einem der Ansprüche 1 bis 13 auszuführen.

## Revendications

1. Procédé de commande du fonctionnement d'un injecteur de carburant (14) au sein d'un système moteur (1) pour compenser des erreurs d'apport de carburant résultant de variations de pression au sein du système moteur (1), l'injecteur (14) étant associé à une valeur de fonctionnement d'injecteur, le procédé comprenant :
la réception de données relatives à au moins un paramètre de fonctionnement de moteur (100) ;
la détermination d'une valeur de compensation pour la valeur de fonctionnement d'injecteur en fonction du au moins un paramètre de fonctionnement de moteur (102), dans lequel la détermination de la valeur de compensation comprend le calcul de la valeur de compensation à partir d'un modèle de moteur qui compense des erreurs de carburant résultant d'ondes de pression au sein du système moteur utilisant le au moins un paramètre de fonctionnement de moteur, et comprend en outre la compensation d'erreurs de phase entre des ondes de pression modélisées et des ondes de pression réelles au sein de l'injecteur ;
l'application de la valeur de compensation à la valeur de fonctionnement d'injecteur afin de commander le fonctionnement de l'injecteur de carburant (104).

2. Procédé selon la revendication 1, dans lequel la réception de données relatives à au moins un paramètre de fonctionnement comprend la réception de données relatives à la pression de carburant et à la température de carburant et le modèle de moteur compense des erreurs de carburant en fonction des données reçues.

3. Procédé selon la revendication 1 ou la revendication 2, dans lequel le modèle de moteur (118) comprend un premier modèle (118a) qui compense des erreurs de carburant résultant d'ondes de pression haute fréquence au sein du système moteur et un second modèle (118b) qui compense des erreurs de carburant résultant d'ondes de pression basse fréquence au sein du système moteur (1).

4. Procédé selon la revendication 3, dans lequel la détermination de la valeur de compensation comprend la combinaison de la sortie des premier et second modèles (118a, 118b) pour générer une valeur de compensation combinée.

5. Procédé selon l'une quelconque des revendications précédentes, dans lequel le modèle de moteur (118) comprend une table de consultation reliant le au moins un paramètre de fonctionnement à une valeur de compensation.

6. Procédé selon la revendication 5, dans lequel le au moins un paramètre de fonctionnement de moteur comprend l'un parmi : un temps d'ouverture d'injecteur, une température et une pression de carburant.

7. Procédé selon l'une quelconque des revendications 1 à 4, dans lequel le modèle de moteur (118) comprend un modèle théorique.

8. Procédé selon la revendication 7, dans lequel le modèle théorique comprend la modélisation de variations de pression au sein du système moteur (1) sur la base d'une forme d'onde sinusoïdale.

9. Procédé selon l'une quelconque des revendications précédentes, comprenant en outre la réception de la valeur de fonctionnement d'injecteur.

10. Procédé selon la revendication 9, dans lequel la valeur de fonctionnement d'injecteur comprend le temps d'ouverture d'injecteur nécessaire pour fournir une quantité de carburant exigée.

11. Procédé selon l'une quelconque des revendications précédentes, dans lequel la valeur de fonctionnement d'injecteur est un temps d'ouverture d'injecteur et la valeur de compensation comprend un ajustement au temps d'ouverture d'injecteur.

12. Procédé selon la revendication 11, dans lequel l'étape d'application comprend la génération d'une valeur de fonctionnement d'injecteur compensée.

13. Procédé selon la revendication 11 ou la revendication 12, dans lequel la valeur de compensation comprend un multiplicateur ou un facteur d'échelle pour le temps d'ouverture d'injecteur.

14. Unité de commande électronique (3) conçue pour commander le fonctionnement d'un injecteur de carburant (14) au sein d'un système moteur (1) pour compenser les erreurs d'apport de carburant résultant de variations de pression au sein du système moteur (1), l'injecteur (14) étant associé à une valeur de fonctionnement d'injecteur, l'unité de commande électronique (3) comprenant :
des moyens de réception conçus pour recevoir des données relatives à au moins un paramètre de fonctionnement de moteur ;
des moyens de détermination conçus pour déterminer une valeur de compensation pour la valeur de fonctionnement d'injecteur en fonction du au moins un paramètre de fonctionnement de moteur, dans lequel la détermination de valeur de compensation comprend le calcul de la valeur de compensation à partir d'un modèle de moteur qui compense des erreurs de carburant résultant d'ondes de pression au sein du système moteur à l'aide du au moins un paramètre de fonctionnement de moteur, et comprend en outre la compensation d'erreurs de phase entre des ondes de pression modélisées et des ondes de pression réelles au sein de l'injecteur ;
des moyens d'application conçus pour appliquer la valeur de compensation à la valeur de fonctionnement d'injecteur afin de commander le fonctionnement de l'injecteur de carburant.

15. Support lisible par ordinateur comprenant un programme informatique conçu pour configurer un ordinateur ou une unité de commande électronique pour implémenter le procédé selon l'une quelconque des revendications 1 à 13.
